# EUROPÄISCHE PATENTSCHRIFT

(11) **EP 1 970 614 B1**
(45) Veröffentlichungstag und Bekanntmachung des Hinweises auf die Patenterteilung: **21.07.2010**
(21) Anmeldenummer: 08150114.0
(22) Anmeldetag: 09.01.2008
(51) Int. Cl.: F16L 33/22, F16L 39/02, F16L 11/22

(54) **Schlaucharmatur für einen Schlauch mit mehreren Schlauchkammern**
Hose fitting for a hose with multiple chambers
Armature de tuyau souple pour un tuyau souple doté de plusieurs chambres

(30) Priorität: 12.01.2007 DE 202007000761 U
(43) Veröffentlichungstag der Anmeldung: 17.09.2008
(73) Patentinhaber: Meister Plast GmbH, 58454 Witten (DE)
(72) Erfinder: Meister, Marcus, 44807 Bochum (DE)
(74) Vertreter: Patentanwälte Dr. Solf & Zapf

(56) Entgegenhaltungen:
- EP-A- 1 416 215
- WO-A-85/00003
- DE-A1- 3 537 077
- DE-U1- 8 606 136
- DE-U1- 8 811 174
- GB-A- 903 304
- US-A1- 2005 229 989

## Beschreibung

Die vorliegende Erfindung betrifft eine Schlaucharmatur für einen Schlauch mit mindestens zwei Schlauchkammern, insbesondere für einen Sprühschlauch, mit jeder Schlauchkammer zugeordneten, jeweils einen Innenkanal aufweisenden Einstecknippeln und mit einer Mündungsplatte, die durchgehende Öffnungen aufweist, mit welcher die Einstecknippel verbunden sind, sowie mit einer Klemmeinrichtung, welche einesteils aus einem geschlitzten Ring, der eine Länge, einen sich einendig mindestens über einen Teil dieser Länge erstreckenden Außengewindeabschnitt und anderendig eine Einstecköffnung für den Schlauch aufweist, und andernteils aus einer nach Art einer Überwurfmutter ausgebildeten auf den Außengewindeabschnitt des Rings aufschraubbaren Schraubhülse gebildet ist.

Eine derartige Armatur ist aus der DE 35 37 077 C2 bekannt. Dieses Dokument beschreibt einen Sprühschlauch mit mehreren Kanälen und über die Länge der Kanäle verteilten, sich unter Druck öffnenden Sprühschlitzen und mit an den Enden des Sprühschlauches angebrachten Armaturen. Um zu erreichen, dass ein derartiger Sprühschlauch auch von Laien problemlos auf eine individuelle Länge gebracht, d. h. verkürzt werden kann, ist dabei vorgesehen, dass die Armatur eine der Anzahl der Kanäle entsprechende Zahl von Einstecknippeln mit Innenkanälen aufweist. Dabei entspricht der Außendurchmesser der Einstecknippel mindestens dem Innendurchmesser der Kanäle. Die Einstecknippel sind gemeinsam an einer ebenfalls durchgehende Öffnungen aufweisenden Mündungsplatte angebracht, und der Einsteckbereich ist von einer Klemmeinrichtung umschlossen. Die Klemmeinrichtung umfasst einen geschlitzten Ring mit Außengewinde und eine Schraubhülse mit auf das Außengewinde aufschraubbarem Innengewinde, die nach Art einer Überwurfmutter ausgebildet ist. Der Schlitz verläuft in Längsrichtung vollständig über die Länge des Ringes. Eine dadurch nach einem Einstecken eines Schlauches vorhandene Aufweitung kann ein Aufschrauben der Schraubhülse auf das Außengewinde erschweren, weil es dazu kommen kann, dass die Schraubhülse auf dem Außengewinde des Ringes anfänglich nicht richtig greift. Damit dies vermieden wird, muss der Ring bei der Montage entweder zusammengepresst werden oder es wird - wie ebenfalls in der DE 35 37 077 C2 ausgeführt - vorgesehen, dass das Außengewinde des Ringes leicht konisch zulaufend ausgebildet ist.

Das Dokument DE 8606136 U zeigt den Oberbegriff des Anspruchs 1.

Der vorliegenden Erfindung liegt die Aufgabe zugrunde, eine Schlaucharmatur der eingangs beschriebenen Art zu schaffen, die sich bei hoher Funktionssicherheit und konstruktiv einfachem Aufbau durch eine vereinfachte Montage, insbesondere durch die Möglichkeit einer maschinellen Montage, auszeichnet.

Erfindungsgemäß wird dies dadurch erreicht, dass die Mündungsplatte zusammen mit den Einstecknippeln fest mit dem Ring verbindbar oder einstückig mit dem Ring ausgeführt ist, wobei der Ring einen Schlitz aufweist, der in Längsrichtung derart unvollständig über die Länge des Ringes verläuft, dass der Außengewindeabschnitt an seinem freien Ende einen ungeschlitzten Endbereich aufweist.

In bevorzugter symmetrischer Ausführung ist dabei vorgesehen, dass der Ring zwei Schlitze aufweist, die insbesondere gleichartig ausgebildet sind und einander auf dem Ring umfangsgemäß gegenüber liegen.

Zur Konfektionierung einer erfindungsgemäßen Armatur mit einem Schlauch wird die Mündungsplatte mit den Einstecknippeln zunächst fest mit dem Ring verbunden, beispielsweise verrastet oder Ring und Mündungsplatte mit den Einstecknippeln liegen bereits einstückig, beispielsweise als Spritzgussteil vor. Danach wird der Schlauch durch die Einstecköffnung in den Ring eingeführt, wobei die Einstecknippel in die Innenkanäle des Schlauches eingesteckt werden und wobei die Mündungsplatte im Stirnendbereich des Sprühschlauches zu liegen kommt. Dabei ist ein einfaches Einstecken dadurch möglich, dass der Schlitz bei der Montage des Schlauches V-förmig entgegen der Richtung des einzusteckenden Schlauches, insbesondere elastisch rückfedernd, aufweitbar ist, weil der ungeschlitzte Endbereich des Außengewindeabschnitts im Sinne eines Scharniers wirkt. Bei Verwendung von Hart-PVC, Polypropylen oder Polyamid als Ringwerkstoff kann diese Scharnierwirkung gewährleistet werden, ohne dass es am Schlitzende zu Materialschädigungen kommt.

Danach kann auf den Außengewindeabschnitt des Ringes die Schraubhülse aufgeschraubt werden, wobei durch den ungeschlitzten Endbereich in jedem Fall, auch bei maschineller Montage und ohne die Notwendigkeit des Vorhandenseins einer Konizität des Außengewindeabschnitts, gewährleistet ist, dass das Innengewinde der Schraubhülse in das Außengewinde des Ringes zum Eingriff kommt. Das Aufschauben der Schraubhülse bewirkt, dass der Schlitz wieder zusammengedrückt wird und dann die Einstecköffnung im Montagezustand die Außenkontur des Schlauches formangepasst unter Ausbildung einer Presspassung umschließt. Es wird so eine Auszugsicherung des Schlauches aus der Klemmeinrichtung hergestellt, wobei auch im Fall der im Betriebszustand vorliegenden Druckbeaufschlagung des Schlauches eine hohe Funktionssicherheit gewährleistet ist, indem die Einstecknippel nicht aus den Schlauchkammern herausgedrückt werden können.

Alternativ oder mit einer erfindungsgemäßen Armatur kann ein Schlauch eingesetzt werden, bei dem die Schlauchkammern jeweils von einem polymeren Werkstoff umgeben sind und der an einem Ende durch eine Schweißnaht verschlossen ist.

Weitere vorteilhafte Ausführungen der Erfindung sind in den Unteransprüchen und in der nachfolgenden detaillierten Beschreibung enthalten.

Anhand eines durch die beiliegende Zeichnung veranschaulichten Ausführungsbeispiels wird die Erfindung näher erläutert. Dabei zeigen
- Fig.1: in perspektivischer Explosionsdarstellung die Teile einer erfindungsgemäßen Schlaucharmatur einschließlich eines nicht zur Erfindung gehörenden Schlauches,
- Fig. 2: eine Draufsicht auf eine Schraubhülse einer Klemmeinrichtung einer erfindungsgemäßen Schlaucharmatur,
- Fig.3: eine Draufsicht auf eine Mündungsplatte einer erfindungsgemäßen Schlaucharmatur mit Einstecknippeln,
- Fig. 4: eine Draufsicht auf einen Ring der Klemmeinrichtung einer erfindungsgemäßen Schlaucharmatur,
- Fig. 5 und 6: jeweils in Seitensicht, eine erfindungsgemäße Schlaucharmatur in Zwischenzuständen ihrer Montage,
- Fig. 7: ebenfalls in Seitensicht, eine erfindungsgemäße Schlaucharmatur im montierten Zustand,
- Fig. 8: eine Draufsicht auf einen nicht zur Erfindung gehörenden Schlauch.

In den verschiedenen Figuren der Zeichnung sind gleiche Teile stets auch mit den gleichen Bezugszeichen versehen, so dass sie in der Regel auch jeweils nur einmal beschrieben werden.

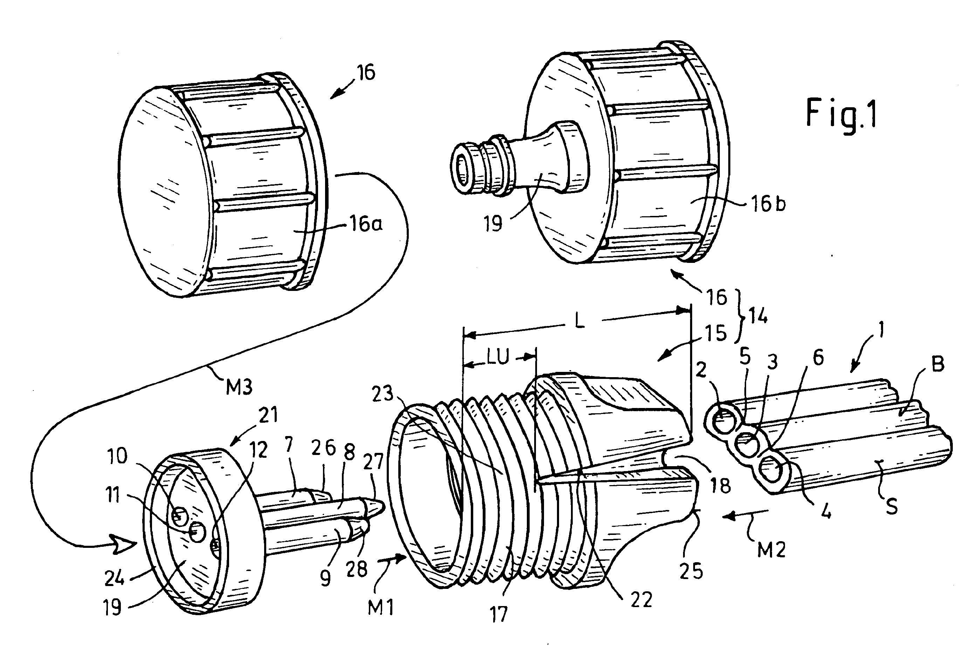

Wie zunächst Fig. 1 zeigt, ist eine erfindungsgemäße Schlaucharmatur zur Konfektionierung eines Schlauches 1 mit mindestens zwei, im dargestellten Fall drei, Schlauchkammern 2, 3, 4, insbesondere für einen Sprühschlauch, bestimmt. Die Schlauchkammern, die durch Trennstege 5, 6 voneinander getrennt sind, können sich unter Druck öffnende Sprühschlitze aufweisen, die über die Schlauchlänge abschnittsweise auf die einzelnen Schlauchkammern 2, 3, 4 verteilt sind.

Jeder Schlauchkammer 2, 3, 4 ist ein Einstecknippel 7, 8, 9 zugeordnet, der jeweils einen nicht näher bezeichneten Innenkanal aufweist. Die Einstecknippel 7, 8, 9 sind mit einer Mündungsplatte 13 verbunden bzw. vorzugsweise einstückig ausgeführt, die durchgehende Öffnungen 10, 11, 12 aufweist. Die Einstecknippel 7, 8, 9 können gleich lang ausgebildet sein oder in die Montagefähigkeit fördernder Weise - wie dargestellt - bevorzugt eine unterschiedliche Länge aufweisen, wobei insbesondere mindestens ein Einstecknippel 8, vorzugsweise ein zentrisch angeordneter Einstecknippel 8, länger ist als die übrigen Einstecknippel 7, 9.

Die erfindungsgemäße Schlaucharmatur weist des Weiteren eine Klemmeinrichtung 14 auf, welche einesteils aus einem geschlitzten Ring 15 und andernteils aus einer nach Art einer Überwurfmutter ausgebildeten auf den Ring 15 aufschraubbaren Schraubhülse 16 gebildet ist.

Der Ring 15, welcher eine Länge L hat, weist einendig einen sich mindestens über einen Teil dieser Länge L erstreckenden Außengewindeabschnitt 17, auf den die Schraubhülse 16 aufschraubbar ist, und anderendig eine Einstecköffnung 18 für den Schlauch 1 auf.

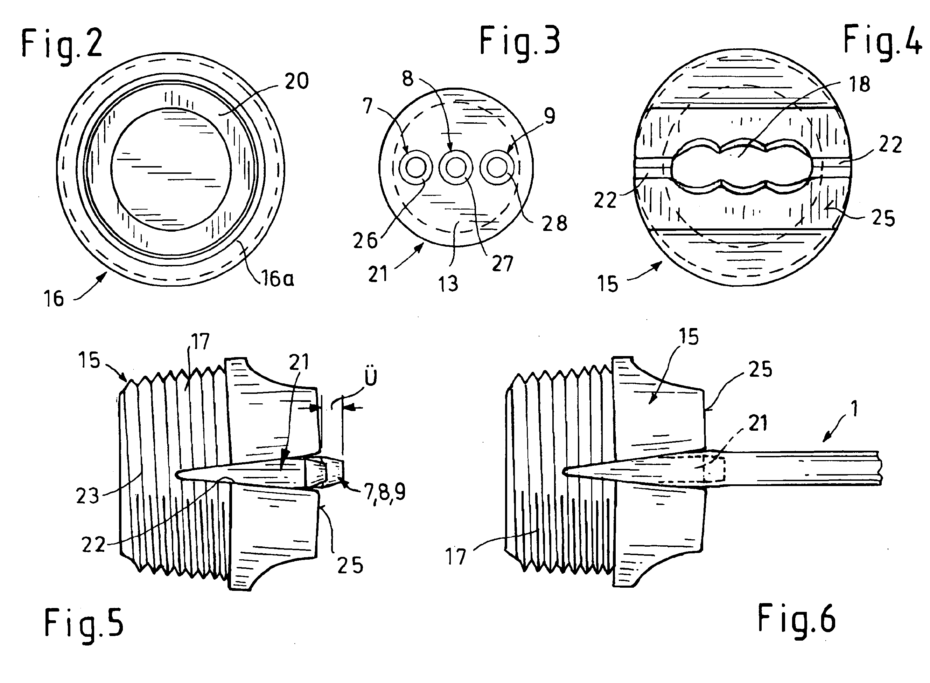

Die Schraubhülse 16 ist in Fig. 1 in zwei unterschiedlichen Ausführungen 16a, 16b gezeigt. In der linken oberen Darstellung ist die Schraubhülse 16 als Verschlussteil 16a ausgebildet, während in der rechten oberen Darstellung eine Ausführung 16b gezeigt ist, bei der die Schraubhülse 16 ein, insbesondere als Steckverbindungsteil ausgebildetes, Schlauchverbindungsteil 19 aufweist. Sowohl für die erste Ausführung 16a, als auch für die zweite Ausführung 16b der Schraubhülse kann vorgesehen sein, dass diese - wie die Einzelteildarstellung in Fig. 2 zeigt - unter Zwischenlage eines Dichtungsrings 20 auf den Ring 15 geschraubt werden.

Fig. 3 zeigt ebenfalls in Einzelteildarstellung die mit der Mündungsplatte 13 verbundenen Einstecknippel 7, 8, 9, die zusammen ein Einsatzteil 21 für den Ring 15 bilden. Das Einsatzteil 21 aus Mündungsplatte 13 und Einstecknippeln 7, 8, 9 ist fest mit dem Ring 15 verbindbar, beispielsweise verrastbar, oder kann auch einstückig mit dem Ring 15 ausgeführt sein.

Aus Fig. 1 und aus Fig. 4, die den geschlitzten Ring 15 in Einzelteildarstellung zeigt, ist zu entnehmen, dass der Ring einen Schlitz 22, vorzugsweise zwei Schlitze 22 aufweist, die insbesondere gleichartig ausgebildet sind und einander auf dem Ring 15 umfangsgemäß gegenüber liegen. Der Schlitz 22 verläuft jeweils in Längsrichtung des Ringes 15, jedoch nicht über die gesamte Länge L, sondern derart unvollständig, dass der Außengewindeabschnitt 17 an seinem freien Ende einen ungeschlitzten Endbereich 23 aufweist. Jeder Schlitz 22 ist zumindest bei einer Montage des Schlauches 1 V-förmig entgegen der Richtung des einzusteckenden Schlauches, insbesondere elastisch rückfedernd, aufweitbar. Dadurch wird ein einfaches Einstecken des Schlauches 1 begünstigt.

Aus Fig. 5 bis 7, die die einzelnen Montageschritte der erfindungsgemäßen Schlaucharmatur veranschaulichen, wird deutlich, dass die Mündungsplatte 13 mit den Einstecknippeln 7, 8, 9 zunächst fest mit dem Ring 15 verbunden, beispielsweise verrastet, wird. Die Montageschritte sind auch in Fig. 1 durch die mit den Bezugszeichen M1, M2 und M3 bezeichneten Pfeile symbolisiert. Der Pfeil M1 veranschaulicht die Verbindung der mit den Einstecknippeln 7, 8, 9 bestückten Mündungsplatte 13 mit dem Ring 15.

In der in Fig. 5 dargestellten, verbundenen Weise können der Ring 15 und die Mündungsplatte 13 mit den Einstecknippeln 7, 8, 9 auch bereits einstückig, beispielsweise als Spritzgussteil, vorliegen, ohne dass dadurch eine maschinelle Montierbarkeit beeinträchtigt wird.

Der Außengewindeabschnitt 17 ist in der dargestellten Ausführung der Erfindung im Sinne einer materialsparenden Bauweise zumindest in einem endseitigen nicht näher bezeichneten Bereich hohlzylindrisch ausgebildet. In diesen Bereich wird das Einsatzteil 21 eingeführt (Montageschritt M1).

Es ist dabei auch noch zu erwähnen, dass die Mündungsplatte 13 in der dargestellten Ausführung einen umlaufenden, der Stabilisierung dienenden Randsteg 24 aufweist. Insbesondere bei einer einstückigen Ausführung von Einsatzteil 21 und Ring 15 kann dieser Randsteg 24 jedoch entfallen.

Der hohlzylindrische Bereich umschließt nach dem Einführen des Einsatzteils 21 mit seiner Wand die Mündungsplatte 13 und den Randsteg 24 formangepasst. Dabei kann insbesondere vorgesehen sein, dass der hohlzylindrische Bereich eine (nicht dargestellte) Innenauflage, wie einen umlaufenden Innensteg, oder entsprechende Rastmittel für die Mündungsplatte 13 aufweist, so dass das Einsatzteil 21 nur bis zu einer bestimmten Tiefe in den Ring 15 eingeschoben werden kann und dann auf der Innenauflage aufliegt bzw. anschlägt. Dabei sollte die Mündungsplatte 13 innerhalb des Ringes 15 in einer axialen Tiefe angeordnet sein, die nicht größer, vorzugsweise genauso groß, ist wie eine axiale Länge LU des ungeschlitzten Endbereichs 23 des Außengewindeabschnitts 17 des Ringes 15.

Durch eine entsprechende Abstimmung der axialen Tiefe der Innenauflage und der Höhe des Randstegs 24 kann in montagetechnisch günstiger Weise erreicht werden, dass der umlaufende Randsteg 24 der Mündungsplatte 13 bündig mit dem Außengewindeabschnitt 17 des Ringes 15 abschließt. So kann später die Schraubhülse 16 spaltfrei auf den Außengewindeabschnitt 17 des Ringes 15 aufgeschraubt und durch den Dichtungsring 20 abgedichtet werden.

Wie Fig. 6 zeigt und der Pfeil M2 in Fig. 1 veranschaulicht, wird der Schlauch 1 danach durch die Einstecköffnung 18 in den Ring 15 eingeführt, wobei die Einstecknippel 7, 8, 9 in die Innenkanäle des Schlauches 15 eingesteckt werden. Die Abstände und Außendurchmesser der Einstecknippel 7, 8, 9 müssen dazu dem Innendurchmesser und der Anordnung der Kanäle 2, 3, 4 entsprechen. Die Mündungsplatte 13 kommt dabei im Stirnendbereich des Sprühschlauches 1 zu liegen. Dabei ist ein einfaches Einstecken dadurch möglich, dass der Schlitz 22 V-förmig entgegen der Richtung des einzusteckenden Schlauches 1 aufgeweitet bzw. aufweitbar ist. Das Einstecken des Schlauches 1 wird auch dadurch begünstigt, dass mindestens einer der Einstecknippel 7, 8, 9 zumindest bündig zu einer Stirnkante 25 der Einstecköffnung 18 angeordnet ist oder über diese Stirnkante 25 hinaussteht. Der Überstand ist in Fig. 5 mit dem Bezugszeichen Ü bezeichnet. Ebenso ist es für ein einfaches Einstecken von Vorteil, wenn - wie dargestellt - die Einstecknippel 7, 8, 9 an ihren von der Mündungsplatte 13 wegweisenden Enden ringförmige radial vorstehende, insbesondere konisch ausgebildete Bereiche 26, 27, 28 aufweisen.

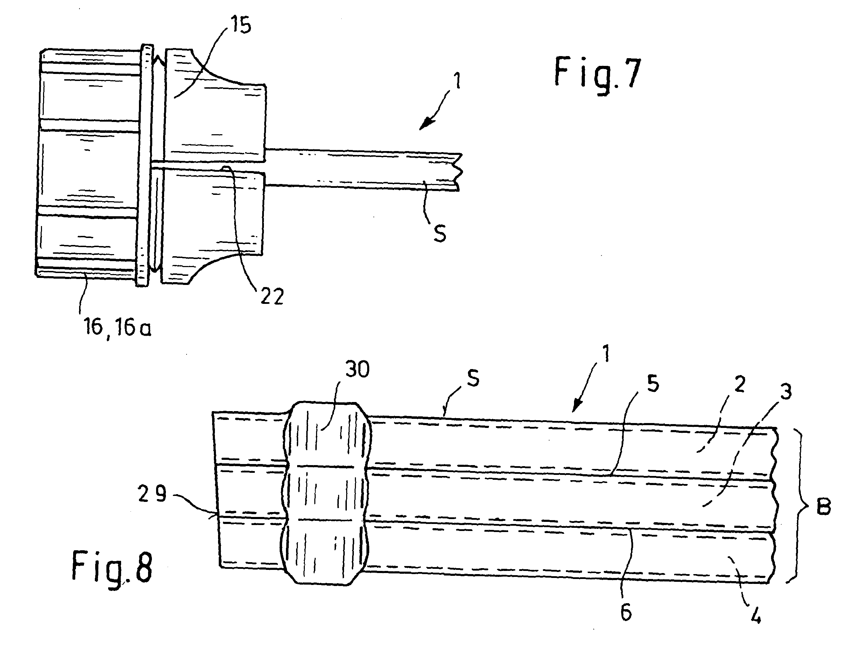

Schließlich kann - und dafür steht in Fig. 1 der Pfeil M3 - auf den Außengewindeabschnitt 17 des Ringes 15 die Schraubhülse 16 aufgeschraubt werden, wobei der in Fig. 7 dargestellte Montagezustand der erfindungsgemäßen Armatur hergestellt wird. Das Aufschrauben der Schraubhülse 16 bewirkt, dass der Schlitz 22 wieder zusammengedrückt wird, wodurch erreicht wird, dass die Einstecköffnung 18 im Montagezustand die Außenkontur des Querschnitts des Schlauchs 1 formangepasst unter Ausbildung einer Presspassung umschließt. Der auf die Einstecknippel 7, 8, 9 aufgesteckte Schlauchbereich ist somit von außen her mittels der Klemmeinrichtung arretiert.

Hierbei ist es im Sinne einer optimalen Verpressung des Schlauchs 1 von Vorteil, wenn bei Aufnahme eines flachen Schlauchs 1, beispielsweise eines Schlauchs 1 mit - wie gezeigt - wenigstens drei nebeneinander liegenden Kammern 2, 3, 4, welcher eine breite Seite B und eine schmale Seite S aufweist, der Schlitz 22, vorzugsweise beide Schlitze 22, derart angeordnet sind, dass jeder Schlitz 22 im Montagezustand längs der schmalen Seite S des Schlauchs 1 verläuft.

Wie bereits erwähnt wurde, kann die Schraubhülse 16 für die Verbindung von Schläuchen 1 oder - wie Fig. 7 zeigt - auch als Verschlussteil 16a ausgebildet sein. Wenn nur ein Verschluss des Schlauches 1 erzielt werden soll, kann aber in einfacher und konstruktiv aufwandsarmer Weise auch ein Schlauch 1 eingesetzt werden, bei dem die Kammern 2, 3, 4 aus einem polymeren Werkstoff bestehen bzw. umgeben sind, der an einem Ende 29, insbesondere an dem Ende 29, das einem Ende mit einer Schlaucharmatur, die eine Schraubhülse 16 mit einem Schlauchverbindungsteil 19 aufweist, gegenüberliegt, durch eine Schweißnaht 30 verschlossen ist. Eine solche Schweißnaht ist in technologisch wenig aufwändiger Weise durch die bekannten bei Polymeren eingesetzten Schweißverfahren herstellbar und gewährleistet im Betriebszustand die erforderliche Druckdichtheit des Schlauches 1.

Die vorliegende Erfindung ist nicht auf das dargestellte Ausführungsbeispiel beschränkt. So können z. B. die Anzahl und Form der Schlauchkammern und die Querschnittskontur des Schlauches 1 vom dargestellten Beispiel abweichen, ohne dass der Rahmen der Erfindung verlassen wird.

### Bezugszeichen

- 1: Schlauch
- 2, 3, 4: Schlauch kammern von 1
- 5, 6: Trennstege zwischen 2, 3, 4
- 7, 8, 9: Einstecknippel für 2, 3, 4
- 10, 11, 12: Öffnungen in 13
- 13: Mündungsplatte
- 14: Klemmeinrichtung aus 15 und 16
- 15: Ring von 14
- 16: Schraubhülse von 14
- 16a: erste Ausführung von 16
- 16b: zweite Ausführung von 16
- 17: Außengewindeabschnitt von 15
- 18: Einstecköffnung von 15 für 1
- 19: Schlauchverbindungsteil von 16b
- 20: Dichtungsring
- 21: Einsatzteil aus 7, 8, 9 und 13
- 22: Schlitz in 15
- 23: ungeschlitzter Endbereich von 17
- 24: Randsteg von 19
- 25: Stirnkante von 18
- 26, 27, 28: Endbereiche von 7, 8, 9
- 29: Ende von 1
- 30: Schweißnaht bei 29

- B: breite Seite von 1
- L: Länge von 15
- LU: Länge von 23
- M1, M2, M3: Montageschritte
- Ü: Überstand von 7, 8, 9 gegenüber 25
- S: schmale Seite von 1

## Patentansprüche

1. Schlaucharmatur für einen Schlauch (1) mit mindestens zwei Schlauchkammern (2, 3, 4), insbesondere für einen Sprühschlauch, mit jeder Schlauchkammer (2, 3, 4) zugeordneten, jeweils einen Innenkanal aufweisenden Einstecknippeln (7, 8, 9) und mit einer Mündungsplatte (13), die durchgehende Öffnungen (10, 11, 12) aufweist, mit welcher die Einstecknippel (7, 8, 9) verbunden sind, sowie mit einer Klemmeinrichtung (14), welche einesteils aus einem mit einem Schlitz (22) versehenen Ring (15), der eine Länge (L), einen sich einendig mindestens über einen Teil dieser Länge (L) erstreckenden Außengewindeabschnitt (17) und anderendig eine Einstecköffnung (18) für den Schlauch (1) aufweist, und andernteils aus einer nach Art einer Überwurfmutter ausgebildeten auf den Außengewindeabschnitt (17) des Rings (15) aufschraubbaren Schraubhülse (16, 16a, 16b) gebildet ist, wobei die Mündungsplatte (13) zusammen mit den Einstecknippeln (7, 8, 9) fest mit dem Ring (15) verbindbar oder einstückig mit dem Ring (15) zugeführt ist,
**dadurch gekennzeichnet, dass** der Schlitz (22) des Ringes (15) in Längsrichtung derart unvollständig über die Länge (L) des Ringes (15) verläuft, dass der Außengewindeabschnitt (17) an seinem freien Ende einen ungeschlitzten Endbereich (23) aufweist.

2. Schlaucharmatur nach Anspruch 1,
**dadurch gekennzeichnet, dass** der Ring (15) zwei Schlitze (22) aufweist, die insbesondere gleichartig ausgebildet sind und einander auf dem Ring (15) umfangsgemäß gegenüber liegen.

3. Schlaucharmatur nach Anspruch 1 oder 2,
**dadurch gekennzeichnet, dass** jeder Schlitz (22) zumindest bei einer Montage des Schlauches (1) V-förmig entgegen der Richtung des einzusteckenden Schlauches (1), insbesondere elastisch rückfedemd, aufweitbar oder V-förmig aufgeweitet ausgebildet ist.

4. Schlaucharmatur nach einem der Ansprüche 1 bis 3,
**dadurch gekennzeichnet, dass** zur Aufnahme eines flachen Schlauchs (1), beispielsweise eines Schlauchs (1) mit wenigstens drei nebeneinander liegenden Schlauchkammern (2, 3, 4), welcher eine breite Seite (B) und eine schmale Seite (S) aufweist, der Schlitz (22), vorzugsweise beide Schlitze (22), derart angeordnet sind, dass jeder Schlitz (22) im Montagezustand längs der schmalen Seite (S) des Schlauchs (1) verläuft.

5. Schlaucharmatur nach einem der Ansprüche 1 bis 4,
**dadurch gekennzeichnet, dass** die Mündungsplatte (13) einen umlaufenden Randsteg (24) aufweist.

6. Schlaucharmatur nach einem der Ansprüche 1 bis 5,
**dadurch gekennzeichnet, dass** der Außengewindeabschnitt (17) zumindest in einem endseitigen Bereich hohlzylindrisch ausgebildet ist.

7. Schlaucharmatur nach Anspruch 6,
**dadurch gekennzeichnet, dass** der hohlzylindrische Bereich eine Innenauflage, wie einen umlaufenden Innensteg, für die Mündungsplatte (13) aufweist.

8. Schlaucharmatur nach Anspruch 6 oder 7,
**dadurch gekennzeichnet, dass** der hohlzylindrische Bereich mit seiner Wand die Mündungsplatte (13) und gegebenenfalls den Randsteg (24) formangepasst umschließt.

9. Schlaucharmatur nach einem der Ansprüche 1 bis 8,
**dadurch gekennzeichnet, dass** die Mündungsplatte (13) in einer axialen Tiefe innerhalb des Ringes (15) angeordnet ist, die nicht größer, vorzugsweise genauso groß, ist wie eine axiale Länge (LU) des ungeschlitzten Endbereichs (23).

10. Schlaucharmatur nach einem der Ansprüche 5 bis 9,
**dadurch gekennzeichnet, dass** der umlaufende Randsteg (23) der Mündungsplatte (13) bündig mit dem Außengewindeabschnitt (17) des Ringes (15) abschließt.

11. Schlaucharmatur nach einem der Ansprüche 1 bis 10,
**dadurch gekennzeichnet, dass** die Mündungsplatte (13) einstückig mit den Einstecknippeln (7, 8, 9) und insbesondere zusätzlich auch einstückig mit dem Ring (15) ausgebildet ist.

12. Schlaucharmatur nach einem der Ansprüche 1 bis 10,
**dadurch gekennzeichnet, dass** die Mündungsplatte (13) mit dem Ring (15) verrastbar ist.

13. Schlaucharmatur nach einem der Ansprüche 1 bis 12,
**dadurch gekennzeichnet, dass** die Einstecknippel (7, 8, 9) unterschiedlich lang ausgebildet sind, wobei insbesondere mindestens ein Einstecknippel (8), vorzugsweise ein zentrisch angeordneter Einstecknippel (8), länger ist als die übrigen Einstecknippel (7, 9).

14. Schlaucharmatur nach einem der Ansprüche 1 bis 12,
**dadurch gekennzeichnet, dass** die Einstecknippel (7, 8, 9) gleich lang ausgebildet sind.

15. Schlaucharmatur nach einem der Ansprüche 1 bis 14,
**dadurch gekennzeichnet, dass** mindestens einer der Einstecknippel (7, 8, 9) bündig zu einer Stirnkante (25) der Einstecköffnung (18) angeordnet ist oder über diese Stirnkante (25) hinaussteht (Überstand Ü).

16. Schlaucharmatur nach einem der Ansprüche 1 bis 15,
**dadurch gekennzeichnet, dass** die Einstecknippel (7, 8, 9) an ihren von der Mündungsplatte (13) wegweisenden Enden ringförmige radial vorstehende, insbesondere konisch ausgebildete Bereiche (26, 27, 28) aufweisen.

17. Schlaucharmatur nach einem der Ansprüche 1 bis 16,
**dadurch gekennzeichnet, dass** die Innenkontur der Einstecköffnung (18) für den Schlauch (1) derart ausgebildet ist, dass sie im Montagezustand die Außenkontur des Querschnitts des Schlauchs (1) formangepasst unter Ausbildung einer Presspassung umschließt.

18. Schlaucharmatur nach einem der Ansprüche 1 bis 17,
**dadurch gekennzeichnet, dass** die Schraubhülse (16, 16b) ein, insbesondere als Steckverbindungsteil ausgebildetes, Schlauchverbindungsteil (19) aufweist.

19. Schlaucharmatur nach einem der Ansprüche 1 bis 17,
**dadurch gekennzeichnet, dass** die Schraubhülse (16, 16b) als Verschlussteil (16a) ausgebildet ist.

## Claims

1. Hose fitting for a hose (1) with at least two hose chambers (2, 3, 4), in particular for a sprinkler hose, with insertion nipples (7, 8, 9), assigned to each hose chamber (2, 3, 4) and each having an inner channel, and with a mouth plate (13), which has through-openings (10, 11, 12) and to which the insertion nipples (7, 8, 9) are connected, and also with a clamping device (14) formed, on the one hand, from a ring (15) which is provided with a slit (22) and has a length (L), an externally threaded section (17) extending over at least part of this length (L) at one end and an insertion opening (18) for the hose (1) at the other end, and, on the other hand, from a screw-on sleeve (16, 16a, 16b) which is formed in the manner of a sleeve nut and can be screwed onto the externally threaded section (17) of the ring (15), the mouth plate (13) together with the insertion nipples (7, 8, 9) being firmly connectable to the ring (15) or designed in one piece with the ring (15),
**characterised in that** the slit (22) of the ring (15) runs in the longitudinal direction incompletely over the length (L) of the ring (15) in such a manner that the externally threaded section (17) has a non-slitted end region (23) at its free end.

2. Hose fitting according to Claim 1,
**characterised in that** the ring (15) has two slits (22) which, in particular, are configured in the same manner and lie circumferentially opposite one another on the ring (15).

3. Hose fitting according to Claim 1 or 2, **characterised in that**, at least on assembly of the hose (1), each slit (22) is designed such that it can be widened or is widened in a V-shape opposite the direction of the hose (1) to be inserted, in particular so as to spring back elastically.

4. Hose fitting according to one of Claims 1 to 3, **characterised in that**, to receive a flat hose (1), for example a hose (1) with at least three hose chambers (2, 3, 4) lying side by side, which has a broad side (B) and a narrow side (S), the slit (22), preferably both slits (22), are arranged in such a manner that each slit (22) runs along the narrow side (S) of the hose (1) in the assembled state.

5. Hose fitting according to one of Claims 1 to 4, **characterised in that** the mouth plate (13) has a circumferential edge web (24).

6. Hose fitting according to one of Claims 1 to 5, **characterised in that** the externally threaded section (17) is of hollow-cylindrical configuration at least in an end-side region.

7. Hose fitting according to Claim 6, **characterised in that** the hollow-cylindrical region has an inner support, such as a circumferential inner web, for the mouth plate (13).

8. Hose fitting according to Claim 6 or 7, **characterised in that** the hollow-cylindrical region surrounds with its wall the mouth plate (13) and, where appropriate, the edge web (24) in a manner adapted to the shape thereof.

9. Hose fitting according to one of Claims 1 to 8,
**characterised in that** the mouth plate (13) is arranged inside the ring (15) at an axial depth which is no greater than, preferably exactly equal to, an axial length (LU) of the non-slitted end region (23).

10. Hose fitting according to one of Claims 5 to 9,
**characterised in that** the circumferential edge web (23) of the mouth plate (13) ends flush with the externally threaded section (17) of the ring (15).

11. Hose fitting according to one of Claims 1 to 10,
**characterised in that** the mouth plate (13) is formed in one piece with the insertion nipples (7, 8, 9) and, in particular, additionally also in one piece with the ring (15).

12. Hose fitting according to one of Claims 1 to 10,
**characterised in that** the mouth plate (13) can be locked to the ring (15).

13. Hose fitting according to one of Claims 1 to 12,
**characterised in that** the insertion nipples (7, 8, 9) are designed with different lengths, in particular at least one insertion nipple (8), preferably a centrally arranged insertion nipple (8), being longer than the rest of the insertion nipples (7, 9).

14. Hose fitting according to one of Claims 1 to 12,
**characterised in that** the insertion nipples (7, 8, 9) are designed with equal lengths.

15. Hose fitting according to one of Claims 1 to 14,
**characterised in that** at least one of the insertion nipples (7, 8, 9) is arranged flush with a front edge (25) of the insertion opening (18) or projects beyond this front edge (25) (projecting length Ü).

16. Hose fitting according to one of Claims 1 to 15,
**characterised in that** the insertion nipples (7, 8, 9) have, at their ends facing away from the mouth plate (13), annular radially projecting, in particular conically configured, regions (26, 27, 28).

17. Hose fitting according to one of Claims 1 to 16,
**characterised in that** the inner contour of the insertion opening (18) for the hose (1) is configured in such a manner that, in the assembled state, it surrounds the outer contour of the cross-section of the hose (1) in a manner adapted to the shape thereof, so as to form an interference fit.

18. Hose fitting according to one of Claims 1 to 17,
**characterised in that** the screw-on sleeve (16, 16b) has a hose-connecting part (19), designed in particular as a plug-in connecting part.

19. Hose fitting according to one of Claims 1 to 17,
**characterised in that** the screw-on sleeve (16, 16b) is designed as a closure part (16a).

## Revendications

1. Accessoire de raccordement pour un tuyau flexible (1) muni d'au moins deux chambres (2, 3, 4), en particulier pour un flexible de pulvérisation, comportant des raccords enfichables (7, 8, 9), associés à chacune des chambres (2, 3, 4) et munis chacun d'un conduit intérieur, et comportant une plaque d'embouchure (13), qui est munie d'ouvertures (10, 11, 12) débouchantes et à laquelle sont reliés les raccords enfichables (7, 8, 9), et comportant un dispositif de serrage (14), formé, d'une part, par une bague (15), qui est munie d'une fente (22) et comprend une longueur (L), une partie à filetage extérieur (17) qui s'étend au niveau d'une extrémité sur au moins une partie de cette longueur (L) et, au niveau de l'autre extrémité, une ouverture d'enfichage (18) pour le tuyau flexible (1), et, d'autre part, par un manchon fileté (16, 16a, 16b) réalisé à la manière d'un écrou d'accouplement et apte à être vissé sur la partie à filetage extérieur (17) de la bague (15), la plaque d'embouchure (13) pouvant, conjointement avec les raccords enfichables (7, 8, 9), être assemblée de manière fixe avec la bague (15) ou être réalisée d'un seul tenant avec la bague (15), **caractérisé en ce que** la fente (22) de la bague (15) s'étend dans la direction longitudinale incomplètement sur la longueur (L) de la bague (15), de telle sorte que la partie à filetage extérieur (17) comporte, au niveau de son extrémité libre, une zone d'extrémité (23) non fendue.

2. Accessoire de raccordement pour tuyau flexible selon la revendication 1,
**caractérisé en ce que** la bague (15) comporte deux fentes (22), qui sont réalisées en particulier de manière identique et sont disposées en regard l'une de l'autre sur le pourtour de la bague (15).

3. Accessoire de raccordement pour tuyau flexible selon la revendication 1 ou 2,
**caractérisé en ce que** chaque fente (22), au moins lors du montage du tuyau flexible (1), peut s'élargir en forme de V, en particulier de manière à revenir élastiquement en position initiale, dans le sens opposé au sens du tuyau flexible (1) à enficher ou est réalisée avec un élargissement en forme de V.

4. Accessoire de raccordement pour tuyau flexible selon l'une quelconque des revendications 1 à 3,
**caractérisé en ce que** pour recevoir un tuyau flexible (1) plat, par exemple un tuyau flexible (1) avec au moins trois chambres (2, 3, 4) juxtaposées, qui comporte un côté large (B) et un côté étroit (S), la fente (22), de préférence les deux fentes (22), sont disposées de telle sorte que chaque fente (22), dans la position de montage, s'étend le long du côté étroit (S) du tuyau flexible (1).

5. Accessoire de raccordement pour tuyau flexible selon l'une quelconque des revendications 1 à 4,
**caractérisé en ce que** la plaque d'embouchure (13) comporte un rebord (24) périphérique.

6. Accessoire de raccordement pour tuyau flexible selon l'une quelconque des revendications 1 à 5,
**caractérisé en ce que** la partie à filetage extérieur (17), au moins dans une zone du côté extrémité, est réalisée en forme de cylindre creux.

7. Accessoire de raccordement pour tuyau flexible selon la revendication 6,
**caractérisé en ce que** la zone cylindrique creuse comporte un appui intérieur, tel qu'une nervure intérieure périphérique, pour la plaque d'embouchure (13).

8. Accessoire de raccordement pour tuyau flexible selon la revendication 6 ou 7,
**caractérisé en ce que** la zone cylindrique creuse enserre avec sa paroi, de manière ajustée en forme, la plaque d'embouchure (13) et, le cas échéant, le rebord (24).

9. Accessoire de raccordement pour tuyau flexible selon l'une quelconque des revendications 1 à 8,
**caractérisé en ce que** la plaque d'embouchure (13) est disposée dans une profondeur axiale à l'intérieur de la bague (15), laquelle n'est pas plus grande, de préférence est aussi grande qu'une longueur axiale (LU) de la zone d'extrémité (23) non fendue.

10. Accessoire de raccordement pour tuyau flexible selon l'une quelconque des revendications 5 à 9,
**caractérisé en ce que** le rebord (23) périphérique de la plaque d'embouchure (13) se termine à fleur de la partie à filetage extérieur (17) de la bague (15).

11. Accessoire de raccordement pour tuyau flexible selon l'une quelconque des revendications 1 à 10,
**caractérisé en ce que** la plaque d'embouchure (13) est réalisée d'un seul tenant avec les raccords enfichables (7, 8, 9) et, en particulier, en plus, aussi d'un seul tenant avec la bague (15).

12. Accessoire de raccordement pour tuyau flexible selon l'une quelconque des revendications 1 à 10,
**caractérisé en ce que** la plaque d'embouchure (13) peut être encliquetée sur la bague (15).

13. Accessoire de raccordement pour tuyau flexible selon l'une quelconque des revendications 1 à 12,
**caractérisé en ce que** les raccords enfichables (7, 8, 9) sont réalisés avec des longueurs différentes, en particulier au moins un raccord enfichable (8), de préférence un raccord enfichable (8) disposé au centre, étant plus long que les autres raccords enfichables (7, 9).

14. Accessoire de raccordement pour tuyau flexible selon l'une quelconque des revendications 1 à 12,
**caractérisé en ce que** les raccords enfichables (7, 8, 9) sont réalisés avec la même longueur.

15. Accessoire de raccordement pour tuyau flexible selon l'une quelconque des revendications 1 à 14,
**caractérisé en ce qu'**au moins un des raccords enfichables (7, 8, 9) est disposé à fleur avec une arête frontale (25) de l'ouverture d'enfichage (18) ou s'avance au-delà de cette arête frontale (25) (débord Ü).

16. Accessoire de raccordement pour tuyau flexible selon l'une quelconque des revendications 1 à 15,
**caractérisé en ce que** les raccords enfichables (7, 8, 9), au niveau de leurs extrémités détournées de la plaque d'embouchure (13), comportent des zones annulaires (26, 27, 28) faisant saillie radialement, réalisées en particulier avec une forme conique.

17. Accessoire de raccordement pour tuyau flexible selon l'une quelconque des revendications 1 à 16,
**caractérisé en ce que** le contour intérieur de l'ouverture d'enfichage (18) pour le tuyau flexible (1) est réalisé de telle sorte que, dans la position de montage, il enserre, de manière ajustée en forme, le contour extérieur de la section du tuyau flexible (1), moyennant la formation d'un ajustement serré.

18. Accessoire de raccordement pour tuyau flexible selon l'une quelconque des revendications 1 à 17,
**caractérisé en ce que** le manchon fileté (16, 16b) comporte un élément d'assemblage fileté (19), réalisé en particulier sous la forme d'un assemblage à enficher.

19. Accessoire de raccordement pour tuyau flexible selon l'une quelconque des revendications 1 à 17,
**caractérisé en ce que** le manchon fileté (16, 16b) est réalisé sous la forme d'un élément de fermeture (16a).
